# EUROPEAN PATENT SPECIFICATION

(11) **EP 3 200 499 B1**
(45) Date of publication and mention of the grant of the patent: **13.03.2019**
(21) Application number: 14906277.0
(22) Date of filing: 19.11.2014
(51) Int. Cl.: H04W 24/04, H04W 36/00, H04M 1/253

(54) **MOBILITY MANAGEMENT ENTITY AND HOME SUBSCRIBER SERVER FOR HANDLING CALLEE SERVICE ACCORDING TO CSFB AND A FAULTY STATE OF A PGW**
MOBILITÄTSVERWALTUNGSEINHEIT UND HEIMTEILNEHMERSERVER ZUR HANDHABUNG DES DIENSTES EINER ANGERUFENEN PERSON LAUT CSFB UND EINEM FEHL-STATUS EINES PGW
PROCÉDÉ, ENTITÉ DE GESTION DE MOBILITÉ ET SERVEUR D'ABONNÉ DOMESTIQUE POUR GÉRER UN SERVICE D'APPELÉ SELON CSFB ET UN ÉTAT DÉFECTUEUX D'UN PGW

(43) Date of publication of application: 02.08.2017
(73) Proprietor: Huawei Technologies Co. Ltd., Shenzhen, Guangdong 518129 (CN)
(72) Inventor: NI, Guoyu, Shenzhen Guangdong 518129 (CN); WANG, Rui, Shenzhen Guangdong 518129 (CN); XI, Guobao, Shenzhen Guangdong 518129 (CN)
(74) Representative: Thun, Clemens
(86) International application number: PCT/CN2014/091588
(87) International publication number: WO 2016/078026

(56) References cited:
- WO-A1-2010/016518
- WO-A1-2013/125896
- CN-A- 102 378 208
- CN-A- 104 010 318
- US-A1- 2012 134 259
- "Discussion on T-ADS Improvement solution", 3GPP DRAFT; S2-111601_T-ADS ANALYSIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava, Slovakia; 20110411 - 20110415, 6 April 2011 (2011-04-06), XP050631592, [retrieved on 2011-04-06]
- "3rd Generation Partnership Project; Technical Specification Group Services and System Aspects; Architectural requirements (Release 13)", 3GPP STANDARD; 3GPP TS 23.221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.0.0, 20 June 2014 (2014-06-20), pages 1-52, XP050774097, [retrieved on 2014-06-20]
- "3rd Generation Partnership Project; Technical Specification Group Services and System Aspects; Circuit Switched (CS) fallback in Evolved Packet System (EPS); Stage 2 (Release 11)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.9.0, 20 June 2014 (2014-06-20), pages 1-99, XP050774107, [retrieved on 2014-06-20]
- "3rd Generation Partnership Project; Technical Specification Group Core Network and Terminals; Restoration procedures (Release 12)", 3GPP STANDARD; 3GPP TS 23.007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V12.6.0, 30 September 2014 (2014-09-30), pages 1-91, XP050926329, [retrieved on 2014-09-30]

## Description

### TECHNICAL FIELD

The present invention relates to the communications field, and more specifically, to a called service processing method, a mobility management entity, and a home subscriber server.

### BACKGROUND

With development of Long Term Evolution (Long Term Evolution, LTE) network technologies, an LTE network has covered some urban areas and traffic hotspot areas. In a current communications network, the LTE network coexists with a 2^{nd} Generation (2^{nd} Generation, 2G)/a 3^{rd} Generation (3^{rd} Generation, 3G) network. Because the LTE network is in a construction phase, some LTE networks may not support a voice service, but some LTE networks may support a voice service. In the LTE network that supports the voice service, user equipment (User Equipment, UE) may initiate a voice service by using voice over LTE (Voice over Long Term Evolution, VoLTE). VoLTE is a technical solution in which only an LTE network is used and a voice packet is transmitted by using an LTE packet switched (Packet Switched, PS) network. Therefore, network elements in the LTE network need to work normally, so that the voice service can be normally used. In addition, when initiating the voice service, the user equipment (User Equipment, UE) in the LTE network may first fall back to a 2G/3G network that has a circuit switched (Circuit Switched, CS) domain, performs the voice service in the 2G/3G network that has the CS domain, and then returns to the LTE network after a conversation is completed. The technology of switching from a PS domain of an LTE network to a CS domain of a 2G/3G network is referred to as a CSFB technology.

In the prior art, when both CSFB and VoLTE exist in a network, there is a complete mechanism for selecting CSFB or VoLTE to make a voice conversation. For a calling scenario, UE performs selection based on a capability of the UE and a network capability. For example, if the UE supports both VoLTE and CSFB, and a network side also supports both VoLTE and CSFB, the UE preferably selects VoLTE or CSFB according to a preference of the UE. If the UE supports only CSFB, the UE selects only CSFB even if a network side supports both VoLTE and CSFB. For a called scenario, a network side selects a path (called party domain selection) for a voice service. For example, when UE has performed Internet Protocol multimedia subsystem (IP Multimedia Sub system, IMS) registration, and the network side supports VoLTE, the network side preferably selects VoLTE for the UE to perform a service. However, in this case, if a packet data network gateway (Packet Data Network Gateway, PGW) is faulty, a called party cannot be connected.

WO 2013/125896 A1 refers to a method for supporting a voice service for a network terminal in a wireless communication system. The method includes transmitting an update location request (ULR) message to a home subscriber server (HSS) by a serving node, wherein if the serving node may not evaluate an IP multimedia subsystem (IMS) voice over PS session-supported indication value for the terminal, the ULR has no information on homogeneous support of IMS voice in a PS session.

US 2012/134259 A1 refers to a method for providing UE session resilience performed in a first PDN-GW that is coupled to a second PDN-GW, which are both in a PDN-GW pool. The method provides UE session resilience by allowing the first PDN-GW to provide connectivity for UE sessions previously serviced by the second PDN-GW after the second PDN-GW becomes non-operational. The first PDN-GW recognizes that the second PDN-GW failed and then activates a plurality of standby UE sessions. Each standby UE session is a backup UE session corresponding to a previously active UE session serviced on the second PDN-GW.

### SUMMARY

Embodiments of the present invention provide a called service processing method, a mobility management entity, and a home subscriber server, so that a called service is not affected after a PGW is faulty.

According to a first aspect, a called service processing method to be operated at a mobility management entity MME is provided, including:
generating, by a MME voice over packet switch VOPS capability indication information according to a faulty state of a packet data network gateway PGW after determining that the PGW through which the data associated with a VoLTE call of a user equipment, UE, needs to pass is faulty, where the VOPS capability indication information is used to indicate that a network in which the UE is located does not support VOPS; and
sending, by the MME, the VOPS capability indication information to a home subscriber server HSS;
wherein the UE initially performs VoLTE for a call which falls back by means of circuit switched fallback, CSFB, after a PGW through which the call data pass through is detected as faulty.

With reference to the first aspect, in a first possible implementation manner, the generating, by a mobility management entity MME, voice over packet switch VOPS capability indication information according to a faulty state of a packet data network gateway PGW after determining that the PGW in which user equipment UE is located is faulty includes:
after determining that the PGW in which the UE is located is faulty, receiving, by the MME, a domain selection data query request sent by the HSS, and generating the VOPS capability indication information according to the domain selection data query request and the faulty state of the PGW.

With reference to the first aspect or the first possible implementation manner of the first aspect, in a second possible implementation manner, before the generating voice over packet switch VOPS capability indication information according to a faulty state of a PGW, the method further includes:
determining, by the MME, that the PGW is faulty; and
sending, by the MME, a network element notification message to the HSS, where the network element notification message is used to indicate that the HSS needs to query domain selection data in real time, when the domain selection data needs to be queried during called party domain selection.

According to a second aspect, a called service processing method to be operated at a home subscriber server HSS is provided, including:
receiving, by a HSS voice over packet switch VOPS capability indication information sent by a mobility management entity MME, where the VOPS capability indication information is generated by the MME according to a faulty state of a packet data network gateway PGW after the MME determines that the PGW through which the data associated with a VoLTE call of a user equipment, UE, needs to pass is faulty; the VOPS capability indication information is used to indicate that a network in which the UE is located does not support VOPS; and
sending, by the HSS, the VOPS capability indication information to an application server AS, where the VOPS capability indication information is used to instruct the AS to process a called service of the UE by means of circuit switched fallback CSFB;
wherein the UE initially performs VoLTE for a call which falls back by means of CSFB after a PGW through which the call data pass through is detected as faulty.

With reference to the second aspect, in a first possible implementation manner, before the receiving, by a home subscriber server HSS, voice over packet switch VOPS capability indication information sent by a mobility management entity MME, the method further includes:
receiving, by the HSS, a domain selection data query notification sent by the AS; and
responding, by the HSS, to the domain selection data query notification, and sending a domain selection data query request to the MME; and
the receiving, by a home subscriber server HSS, voice over packet switch VOPS capability indication information sent by a mobility management entity MME includes:
   receiving, by the HSS, the VOPS capability indication information sent by the MME, where the VOPS capability indication information is generated by the MME according to the domain selection data query request and the faulty state of the packet data network gateway PGW after the MME determines that the PGW in which the user equipment UE is located is faulty.

With reference to the first possible implementation manner of the second aspect, in a second possible implementation manner, before the receiving, by the HSS, a domain selection data query notification sent by the AS, the method further includes: receiving, by the HSS, a network element notification message sent by the MME, where the network element notification message is used to indicate that the HSS needs to query domain selection data in real time, when the domain selection data needs to be queried during called party domain selection.

With reference to the second aspect, in a third possible implementation manner, after the receiving, by a home subscriber server HSS, voice over packet switch, VOPS, capability indication information sent by a mobility management entity, MME, the method further comprises:
receiving, by the HSS, a domain selection data query notification sent by the AS; and
the sending, by the HSS, the VOPS capability indication information to an application server AS comprises:
   responding, by the HSS, to the domain selection data query notification, and sending the VOPS capability indication information to the application server AS.

According to a third aspect, a mobility management entity MME is provided, including:
a determining module, configured to determine that a packet data network gateway PGW through which the data associated with a VoLTE call of a user equipment, UE, needs to pass is faulty;
a generation module, configured to generate voice over packet switch VOPS capability indication information according to a faulty state of the PGW after the determining module determines that the PGW through which the data associated with a VoLTE call of the UE needs to pass is faulty, where the VOPS capability indication information is used to indicate that a network in which the UE is located does not support VOPS; and
a sending module, configured to send the VOPS capability indication information to a home subscriber server HSS;
wherein UE initially performs VoLTE for a call which falls back by means of circuit switched fallback, CSFB, after a PGW through which the call data pass through is detected as faulty.

With reference to the third aspect, in a first possible implementation manner, the generation module is specifically configured to: after the determining module determines that the PGW in which the UE is located is faulty, receive a domain selection data query request sent by the HSS, and generate the VOPS capability indication information according to the domain selection data query request and the faulty state of the PGW.

With reference to the third aspect or the first possible implementation manner of the third aspect, in a second possible implementation manner, the sending module is further configured to send a network element notification message to the HSS after the determining module determines that the PGW in which the UE is located is faulty and before the generation module generates the VOPS capability indication information, where the network element notification message is used to indicate that the HSS needs to query domain selection data in real time, when the domain selection data needs to be queried during called party domain selection.

According to a fourth aspect, a home subscriber server HSS is provided, including:
a receiving module, configured to receive voice over packet switch VOPS capability indication information sent by a mobility management entity MME, where the VOPS capability indication information is generated by the MME according to a faulty state of a packet data network gateway PGW after the MME determines that the PGW through which the data associated with a VoLTE call of a user equipment, UE, needs to pass is faulty; the VOPS capability indication information is used to indicate that a network in which the UE is located does not support VOPS; and
a sending module, configured to send the VOPS capability indication information to an application server AS, where the VOPS capability indication information is used to instruct the AS to process a called service of the UE by means of circuit switched fallback CSFB;
wherein the UE initially performs VoLTE for a call which falls back by means of CSFB after a PGW through which the call data pass through is detected as faulty.

With reference to the fourth aspect, in a first possible implementation manner, the receiving module is further configured to receive, before receiving the VOPS capability indication information sent by the MME, a domain selection data query notification sent by the AS;
the sending module is further configured to: respond to the domain selection data query notification, and send a domain selection data query request to the MME; and
the receiving module is specifically configured to receive the VOPS capability indication information sent by the MME, where the VOPS capability indication information is generated by the MME according to the domain selection data query request and the faulty state of the PGW after the MME determines that the packet data network gateway PGW in which the user equipment UE is located is faulty.

With reference to the first possible implementation manner of the fourth aspect, in a second possible implementation manner, the receiving module is further configured to receive, before receiving the domain selection data query notification sent by the AS, a network element notification message sent by the MME, where the network element notification message is used to indicate that the HSS needs to query domain selection data in real time, when the domain selection data needs to be queried during called party domain selection.

With reference to the fourth aspect, in a third possible implementation manner, the receiving module is further configured to:
receive, before receiving the VOPS capability indication information sent by the MME, a domain selection data query notification sent by the AS; and
the sending module is specifically configured to: respond to the domain selection data query notification, and send the VOPS capability indication information to the application server AS.

According to a fifth aspect, a system is provided, including:
the mobility management entity MME according to the third aspect and the home subscriber server HSS according to the fourth aspect.

Based on the foregoing technical solutions, in the embodiments of the present invention, VOPS capability indication information that is generated according to a faulty state of a PGW in which UE is located and that indicates that a network in which the UE is located does not support VOPS is sent to an HSS, and a called service of the UE may be processed by means of CSFB, so as to avoid a prior-art problem that a called party of the UE cannot be connected because the called service of the UE is still processed by means of VOLTE. Therefore, the called service is not affected after the PGW is faulty.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2 is a schematic flowchart of a called service processing method according to an embodiment of the present invention;
FIG. 3 is a schematic diagram of an interaction procedure of a called service processing method according to an embodiment of the present invention;
FIG. 4 is a schematic diagram of an interaction procedure of a called service processing method according to another embodiment of the present invention;
FIG. 5 is a schematic diagram of an interaction procedure of a called service processing method according to still another embodiment of the present invention;
FIG. 6 is a schematic flowchart of a called service processing method according to another embodiment of the present invention;
FIG. 7 is a schematic block diagram of an MME according to an embodiment of the present invention;
FIG. 8 is a schematic block diagram of an MME according to another embodiment of the present invention;
FIG. 9 is a schematic block diagram of an HSS according to an embodiment of the present invention;
FIG. 10 is a schematic block diagram of a system according to an embodiment of the present invention;
FIG. 11 is a schematic block diagram of a system according to another embodiment of the present invention;
FIG. 12 is a schematic structural diagram of an MME according to still another embodiment of the present invention; and
FIG. 13 is a schematic structural diagram of an HSS according to another embodiment of the present invention.

### DESCRIPTION OF EMBODIMENTS

The embodiments and/or examples of the following description which are not covered by the appended claims are considered as not being part of the present invention.

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

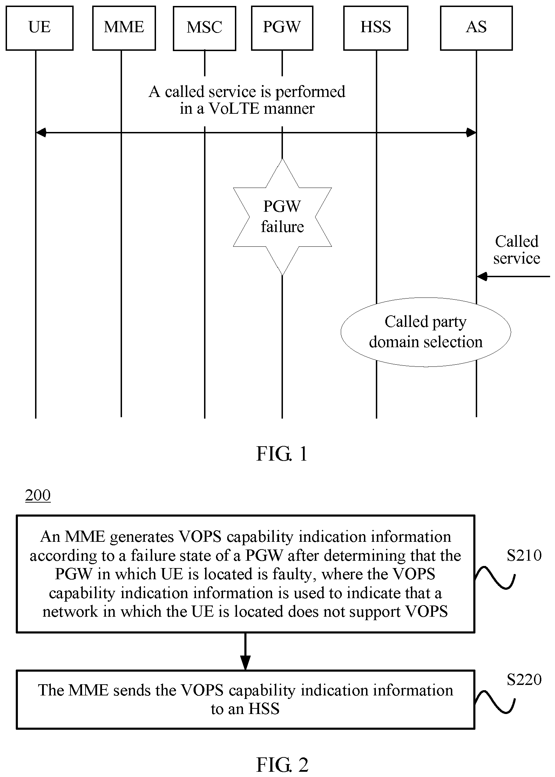

FIG. 1 is a schematic diagram of an application scenario according to an embodiment of the present invention.

In the scenario shown in FIG. 1, a network side and UE support both CSFB and VoLTE. The UE performs IMS registration after accessing a network, and subsequently, a network side of a called service preferably selects a VoLTE processing manner for the UE. In the VoLTE manner, data needs to pass through a PGW during transmission. If the VoLTE manner is still selected for the UE after the PGW is faulty, data transmission fails due to a PGW fault. Consequently, a called party cannot be connected.

It should be understood that, in the embodiments of the present invention, each entity such as a mobility management entity (Mobility Management Entity, MME), a home subscriber server (Home Subscriber Server, HSS), or an application server (Application Server, AS) may be described as a network element or a device. Each entity may be a standalone device or may be a device disposed in another device.

It should be further understood that, in the embodiments of the present invention, user equipment (User Equipment, UE) may be referred to as a terminal (Terminal), a mobile station (Mobile Station, MS), a mobile terminal (Mobile Terminal), or the like. The user equipment may communicate with one or more core networks through a radio access network (Radio Access Network, RAN). For example, the user equipment may be a mobile phone (also referred to as a "cellular" phone) or a computer with a mobile terminal. For example, the user equipment may also be a portable, pocket-sized, handheld, computer built-in, or in-vehicle mobile apparatus that exchanges a voice and/or data with the radio access network.

FIG. 2 shows a schematic flowchart of a called service processing method 200 according to an embodiment of the present invention. The method 200 is performed by an MME. As shown in FIG. 2, the method 200 includes the following steps:
S210. An MME generates VOPS capability indication information according to a faulty state of a PGW after determining that the PGW in which UE is located is faulty, where the VOPS capability indication information is used to indicate that a network in which the UE is located does not support VOPS.
S220. The MME sends the VOPS capability indication information to an HSS.

In this embodiment of the present invention, when the PGW in which the UE is located is faulty, the MME generates, according to the faulty state of the PGW in which the UE is located, the VOPS capability indication information indicating that the network in which the UE is located does not support voice over packet switch (Voice over PS, VOPS), and sends the VOPS capability indication information to the HSS.

In the embodiments of the present invention, the faulty state of the PGW indicates that the PGW is faulty and cannot work normally. A state corresponding to the faulty state is a normal state of the PGW, and the normal state indicates that the PGW works normally and is not faulty. The faulty state of the PGW may be recorded when it is determined that the PGW is faulty. During generation of the VOPS capability indication information, a status of the PGW may be queried, and the VOPS capability indication information is generated according to the faulty state, obtained by means of querying, of the PGW.

During called party domain selection, the HSS may send the VOPS capability indication information to an AS, and the AS may process a called service of the UE according to the VOPS capability indication information by means of CSFB, that is, the called service of the UE is continued by means of CSFB. In this way, a problem that a called party cannot be connected in a long time after the PGW is faulty can be avoided, and instantaneous sharp increase of signaling caused in voice service recovery after the PGW is faulty can also be avoided.

Therefore, according to the called service processing method provided in this embodiment of the present invention, VOPS capability indication information that is generated according to a faulty state of a PGW in which UE is located and that indicates that a network in which the UE is located does not support VOPS is sent to an HSS, and a called service of the UE may be processed by means of CSFB, so that the called service is not affected after the PGW is faulty.

Optionally, in an embodiment of the present invention, that the MME generates VOPS capability indication information according to a faulty state of a PGW after determining that the PGW in which UE is located is faulty includes:
after determining that the PGW in which the UE is located is faulty, the MME receives a domain selection data query request sent by the HSS, and generates the VOPS capability indication information according to the domain selection data query request and the faulty state of the PGW.

This embodiment may be applied to a scenario in which the HSS supports real-time domain selection data query. When receiving the domain selection data query request sent by the HSS, the MME generates the VOPS capability indication information according to the domain selection data query request and the faulty state of the PGW.

Optionally, in an embodiment of the present invention, before the generating the voice over packet switch VOPS capability indication information according to the faulty state of the PGW, the method 200 further includes:
the MME determines that the PGW is faulty; and
the MME sends a network element notification message to the HSS, where the network element notification message is used to indicate that the HSS needs to query domain selection data in real time.

Specifically, if the HSS supports real-time domain selection data query, when determining that the PGW in which the UE is located is faulty, the MME may instruct the HSS to subsequently query the domain selection data in real time, and the HSS subsequently queries the domain selection data in real time according to the instruction. Alternatively, the HSS may query the domain selection data in real time without an instruction. The two cases are separately described in the following.

In an embodiment, after determining that the PGW in which the UE is located is faulty, the MME sends the network element notification message to the HSS and instructs the HSS to subsequently query the domain selection data in real time. The network element notification message is a device-level message, that is, the network element notification message carries device-level information rather than specific-user information, so that no extra signaling overheads are caused. According to the network element notification message, the HSS needs to subsequently query the domain selection data in real time, that is, the domain selection data needs to be queried during called party domain selection. When a called service arrives at the AS, the AS sends a domain selection data query notification such as a user information request to the HSS. The HSS queries the domain selection data in real time and sends a domain selection data query request such as a T-ADS data request to the MME. After receiving the domain selection data query request, the MME generates, according to the faulty state of the PGW in which the UE is located, the VOPS capability indication information indicating that the network in which the UE is located does not support VOPS, and sends the VOPS capability indication information to the HSS. The HSS sends the VOPS capability indication information to the AS. The AS continues the called service of the UE according to the VOPS capability indication information by means of CSFB. In this way, the UE falls back to a GU (GSM/UMTS) network by means of CSFB, to connect a called phone.

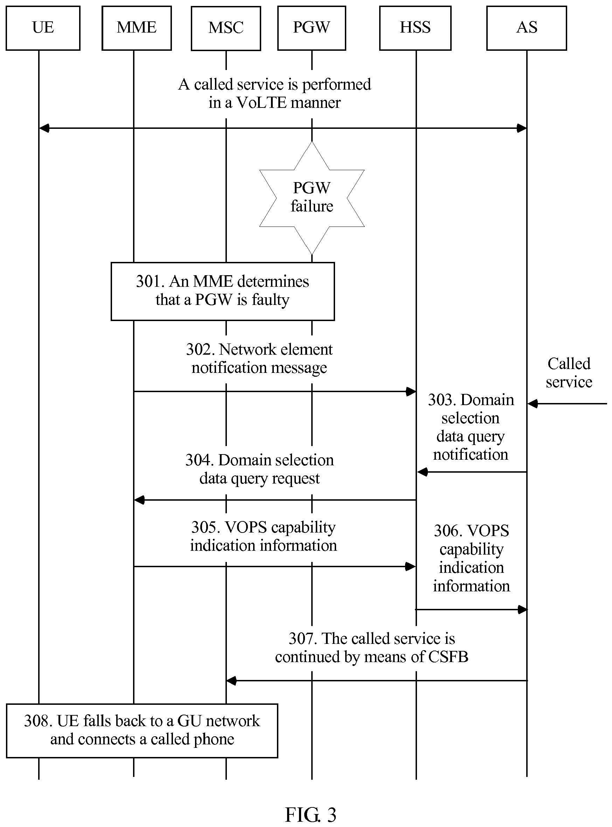

FIG. 3 is a schematic diagram of an interaction procedure according to an embodiment.
301. An MME determines that a PGW in which UE is located is faulty.
302. The MME sends a network element notification message to an HSS.

For example, the network element notification message may be NE Notification. The network element notification message indicates that the HSS needs to subsequently query domain selection data in real time.
303. An AS sends a domain selection data query notification to the HSS.

When a called service arrives at the AS, the AS selects a called party domain, and sends the domain selection data query notification to the HSS.
304. The HSS sends a domain selection data query request to the MME.

The HSS queries the domain selection data in real time, and sends the domain selection data query request to the MME. For example, the domain selection data query request may be an insert subscriber data request (Insert Subscriber Data Request).
305. The MME sends VOPS capability indication information to the HSS.

After receiving the domain selection data query request sent by the HSS, the MME generates, according to a faulty state of the PGW in which the UE is located, the VOPS capability indication information indicating that a network in which the UE is located does not support VOPS, and sends the VOPS capability indication information to the HSS. For example, the MME sends, to the HSS, an insert subscriber data answer (Insert Subscriber Data Answer) that carries the VOPS capability indication information.
306. The HSS sends the VOPS capability indication information to the AS.
307. The AS continues a called service of the UE by means of CSFB.

The AS continues the called service of the UE by means of CSFB according to the VOPS capability indication information indicating that the network in which the UE is located does not support VOPS.
308. The UE falls back to a GU network and connects a called phone.
In another embodiment, a network element notification message does not need to be sent to the HSS. Specifically, in this embodiment, after determining that the PGW in which the UE is located is faulty, the MME does not need to send the network element notification message to the HSS. When a called service arrives at the AS, the AS sends a domain selection data query notification to the HSS. The HSS queries domain selection data in real time, and sends a domain selection data query request to the MME. After receiving the domain selection data query request, the MME generates, according to a faulty state of the PGW in which the UE is located, VOPS capability indication information indicating that a network in which the UE is located does not support VOPS, and sends the VOPS capability indication information to the HSS. The HSS sends the VOPS capability indication information to the AS. The AS continues the called service of the UE according to the VOPS capability indication information by means of CSFB. In this way, the UE falls back to a GU network by means of CSFB, to connect a called phone.

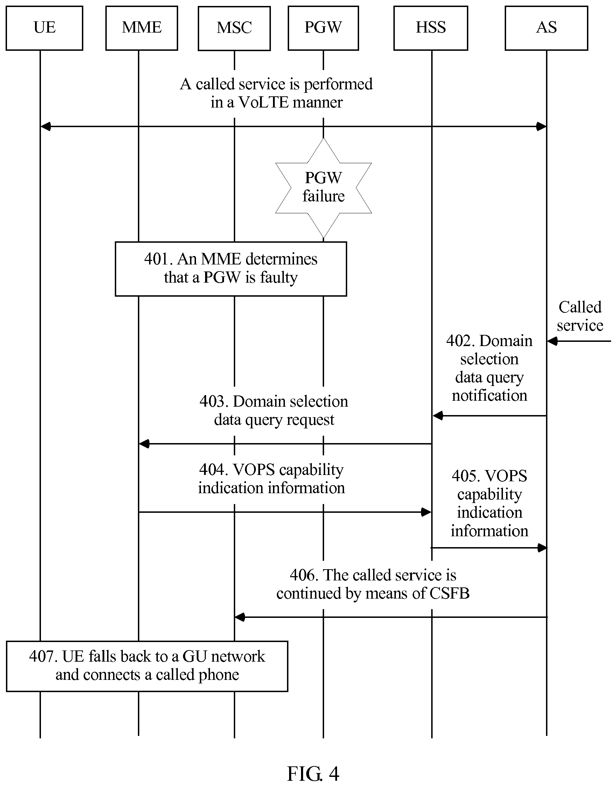

FIG. 4 is a schematic diagram of an interaction procedure according to an embodiment.
401. An MME determines that a PGW in which UE is located is faulty.
402. An AS sends a domain selection data query notification to an HSS.

When a called service arrives at the AS, the AS selects a called party domain, and sends the domain selection data query notification to the HSS.
403. The HSS sends a domain selection data query request to the MME.

The HSS queries domain selection data in real time, and sends the domain selection data query request to the MME. For example, the domain selection data query request may be an insert subscriber data request.
404. The MME sends VOPS capability indication information to the HSS.

After receiving the domain selection data query request sent by the HSS, the MME generates, according to a faulty state of the PGW in which the UE is located, the VOPS capability indication information indicating that a network in which the UE is located does not support VOPS, and sends the VOPS capability indication information to the HSS. For example, the MME sends, to the HSS, an insert subscriber data answer that carries the VOPS capability indication information.
405. The HSS sends the VOPS capability indication information to the AS.
406. The AS continues a called service of the UE by means of CSFB.

The AS continues the called service of the UE by means of CSFB according to the VOPS capability indication information indicating that the network in which the UE is located does not support VOPS.
407. The UE falls back to a GU network and connects a called phone.

Optionally, in an embodiment of the present invention, in a scenario in which the HSS does not support real-time domain selection data query, after determining that the PGW in which the UE is located is faulty, the MME directly generates, according to a faulty state of the PGW in which the UE is located, VOPS capability indication information indicating that a network in which the UE is located does not support VOPS, and sends the VOPS capability indication information to the HSS. The MME may send the VOPS capability indication information by using a user-level message. The user-level message indicates that specific-user information is carried. For example, the MME may send a user-level message notification request (Notify Request) that carries the VOPS capability indication information. When a called service arrives at the AS, the AS sends a domain selection data query notification to the HSS. The HSS sends the previously received VOPS capability indication information to the AS. The AS continues the called service of the UE according to the VOPS capability indication information by means of CSFB. In this way, the UE falls back to a GU network by means of CSFB, to connect a called phone.

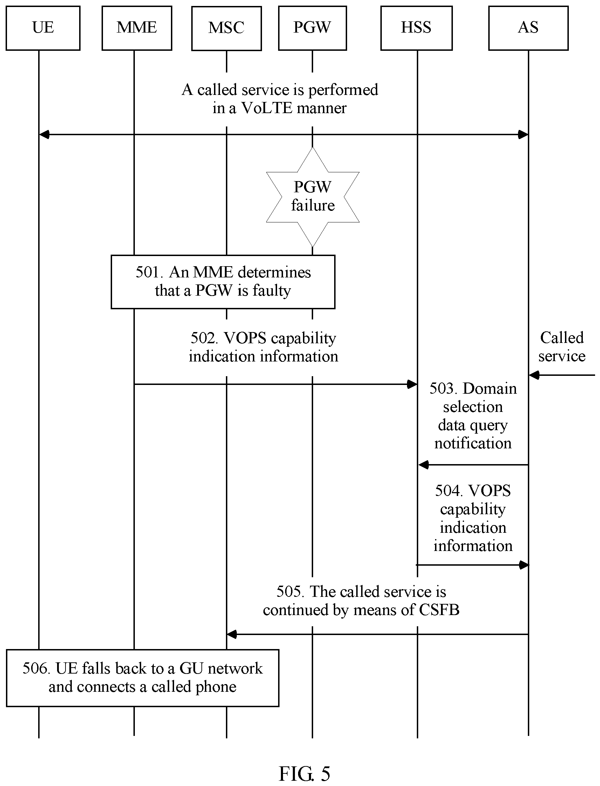

FIG. 5 is a schematic diagram of an interaction procedure according to an embodiment.
501. An MME determines that a PGW in which UE is located is faulty.
502. The MME sends VOPS capability indication information to an HSS.

After determining that the PGW in which the UE is located is faulty, the MME generates, according to a faulty state of the PGW in which the UE is located, the VOPS capability indication information indicating that a network in which the UE is located does not support VOPS, and sends the VOPS capability indication information to the HSS. For example, the MME sends, to the HSS, a notify request that carries the VOPS capability indication information.
503. An AS sends a domain selection data query notification to the HSS.

When a called service arrives at the AS, the AS selects a called party domain, and sends the domain selection data query notification to the HSS.
504. The HSS sends the VOPS capability indication information to the AS.

The HSS does not query domain selection data in real time, but sends the previously received VOPS capability indication information to the AS.
505. The AS continues a called service of the UE by means of CSFB.

The AS continues the called service of the UE by means of CSFB according to the VOPS capability indication information indicating that the network in which the UE is located does not support VOPS.
506. The UE falls back to a GU network and connects a called phone.

According to the called service processing method provided in this embodiment of the present invention, a called service is not affected after a PGW is faulty, and instantaneous sharp increase of signaling caused in voice service recovery after the PGW is faulty can also be avoided.

The called service processing method according to embodiments of the present invention is described above in detail from a perspective of an MME, and a called service processing method according to an embodiment of the present invention is described in the following from a perspective of an HSS.

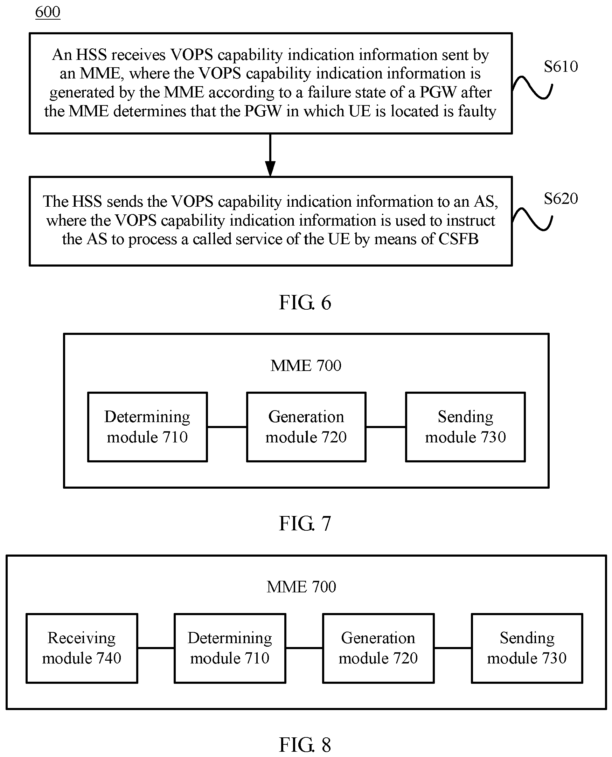

FIG. 6 shows a schematic flowchart of a called service processing method 600 according to another embodiment of the present invention. The method 600 is performed by an HSS. As shown in FIG. 6, the method 600 includes the following steps:
S610. An HSS receives VOPS capability indication information sent by an MME, where the VOPS capability indication information is generated by the MME according to a faulty state of a PGW after the MME determines that the PGW in which UE is located is faulty.
S620. The HSS sends the VOPS capability indication information to an AS, where the VOPS capability indication information is used to instruct the AS to process a called service of the UE by means of CSFB.

In this embodiment of the present invention, when the PGW in which the UE is located is faulty, the MME generates the VOPS capability indication information according to the faulty state of the PGW in which the UE is located. The VOPS capability indication information indicates that a network in which the UE is located does not support VOPS. The MME sends the VOPS capability indication information to the HSS, and the HSS sends the VOPS capability indication information to the AS. The AS may process the called service of the UE according to the VOPS capability indication information by means of CSFB, that is, the AS continues the called service of the UE by means of CSFB. In this way, a problem that a called party cannot be connected in a long time after the PGW is faulty can be avoided, and instantaneous sharp increase of signaling caused in voice service recovery after the PGW is faulty can also be avoided.

Therefore, according to the called service processing method provided in this embodiment of the present invention, VOPS capability indication information generated by an MME according to a faulty state of a PGW in which UE is located is received, and the VOPS capability indication information is sent to an AS, so that the AS may process a called service of the UE by means of CSFB. Therefore, the called service is not affected after the PGW is faulty.

Optionally, in an embodiment of the present invention, before the HSS receives the VOPS capability indication information sent by the MME, the method 600 further includes:
the HSS receives a domain selection data query notification sent by the AS; and
the HSS responds to the domain selection data query notification, and sends a domain selection data query request to the MME.

In this case, that an HSS receives VOPS capability indication information sent by an MME includes:
the HSS receives the VOPS capability indication information sent by the MME, where the VOPS capability indication information is generated by the MME according to the domain selection data query request and the faulty state of the PGW after the MME determines that the PGW in which the UE is located is faulty.

This embodiment may be applied to a scenario in which the HSS supports real-time domain selection data query. When receiving the domain selection data query notification sent by the AS, the HSS queries domain selection data in real time, and sends the domain selection data query request to the MME. When receiving the domain selection data query request sent by the HSS, the MME generates the VOPS capability indication information according to the domain selection data query request and the faulty state of the PGW.

Optionally, in an embodiment of the present invention, before the HSS receives the domain selection data query notification sent by the AS, the method 600 further includes:
the HSS receives a network element notification message sent by the MME, where the network element notification message is used to indicate that the HSS needs to query domain selection data in real time.

Specifically, if the HSS supports real-time domain selection data query, when determining that the PGW in which the UE is located is faulty, the MME may instruct the HSS to subsequently query the domain selection data in real time, and the HSS subsequently queries the domain selection data in real time according to the instruction. Alternatively, the HSS may query the domain selection data in real time without an instruction.

In an embodiment, after determining that the PGW in which the UE is located is faulty, the MME sends the network element notification message to the HSS and instructs the HSS to subsequently query domain selection data in real time. The network element notification message is a device-level message. According to the network element notification message, the HSS needs to subsequently query the domain selection data in real time, that is, the domain selection data needs to be queried during called party domain selection. When a called service arrives at the AS, the AS sends a domain selection data query notification to the HSS. The HSS queries the domain selection data in real time, and sends a domain selection data query request to the MME. After receiving the domain selection data query request, the MME generates, according to a faulty state of the PGW in which the UE is located, VOPS capability indication information indicating that a network in which the UE is located does not support VOPS, and sends the VOPS capability indication information to the HSS. The HSS sends the VOPS capability indication information to the AS. The AS continues the called service of the UE according to the VOPS capability indication information by means of CSFB. In this way, the UE falls back to a GU network by means of CSFB, to connect a called phone.

In another embodiment, a network element notification message does not need to be sent to the HSS. Specifically, in this embodiment, after determining that the PGW in which the UE is located is faulty, the MME does not need to send the network element notification message to the HSS. When a called service arrives at the AS, the AS sends a domain selection data query notification to the HSS. The HSS queries domain selection data in real time, and sends a domain selection data query request to the MME. After receiving the domain selection data query request, the MME generates, according to a faulty state of the PGW in which the UE is located, VOPS capability indication information indicating that a network in which the UE is located does not support VOPS, and sends the VOPS capability indication information to the HSS. The HSS sends the VOPS capability indication information to the AS. The AS continues the called service of the UE according to the VOPS capability indication information by means of CSFB. In this way, the UE falls back to a GU network by means of CSFB, to connect a called phone.

Optionally, in an embodiment of the present invention, after the HSS receives the VOPS capability indication information sent by the MME, the method 600 further includes:
the HSS receives a domain selection data query notification sent by the AS.

In this case, that the HSS sends the VOPS capability indication information to an AS includes:
the HSS responds to the domain selection data query notification, and sends the VOPS capability indication information to the application server AS.

This embodiment may be applied to a scenario in which the HSS does not support real-time domain selection data query. Specifically, in this embodiment, after determining that the PGW in which the UE is located is faulty, the MME directly generates, according to the faulty state of PGW in which the UE is located, the VOPS capability indication information indicating that a network in which the UE is located does not support VOPS, and sends the VOPS capability indication information to the HSS. The MME may send the VOPS capability indication information by using a user-level message. For example, the MME may send a user-level message Notify Request that carries the VOPS capability indication information. When a called service arrives at the AS, the AS sends a domain selection data query notification to the HSS. The HSS sends the previously received VOPS capability indication information to the AS. The AS continues the called service of the UE according to the VOPS capability indication information by means of CSFB. In this way, the UE falls back to a GU network by means of CSFB, to connect a called phone.

It should be understood that, in embodiments of the present invention, interaction between network elements, related features, functions, and the like that are described on an MME side are corresponding to those that are described on an HSS side. For brevity, details are not described herein.

According to the called service processing method provided in this embodiment of the present invention, a called service is not affected after a PGW is faulty, and instantaneous sharp increase of signaling caused in voice service recovery after the PGW is faulty can also be avoided.

It should be understood that sequence numbers of the foregoing processes do not mean execution sequences in the embodiments of the present invention. The execution sequences of the processes should be determined according to functions and internal logic of the processes, and should not be construed as any limitation on the implementation processes of the embodiments of the present invention.

The called service processing methods according to the embodiments of the present invention are described above, and an MME and an HSS according to the embodiments of the present invention are described in the following.

FIG. 7 shows a schematic block diagram of an MME 700 according to an embodiment of the present invention. As shown in FIG. 7, the MME 700 includes:
a determining module 710, configured to determine that a packet data network gateway PGW in which user equipment UE is located is faulty;
a generation module 720, configured to generate voice over packet switch VOPS capability indication information according to a faulty state of the PGW after the determining module 710 determines that the PGW in which the UE is located is faulty, where the VOPS capability indication information is used to indicate that a network in which the UE is located does not support VOPS; and
a sending module 730, configured to send the VOPS capability indication information to a home subscriber server HSS.

The MME provided in this embodiment of the present invention sends, to an HSS, VOPS capability indication information that is generated according to a faulty state of a PGW in which UE is located and that indicates that a network in which the UE is located does not support VOPS, and may process a called service of the UE by means of CSFB, so that the called service is not affected after the PGW is faulty.

In an example of the present invention, optionally, the generation module 720 is specifically configured to: after the determining module 710 determines that the PGW in which the UE is located is faulty, receive a domain selection data query request sent by the HSS, and generate the VOPS capability indication information according to the domain selection data query request and the faulty state of the PGW

In an example of the present invention, optionally, the domain selection data query request may be received by a separate receiving module. For example, as shown in FIG. 8, the MME 700 further includes:
a receiving module 740, configured to receive, after the determining module 710 determines that the PGW in which the UE is located is faulty, a domain selection data query request sent by the HSS.

The generation module 720 is specifically configured to generate the VOPS capability indication information according to the domain selection data query request and the faulty state of the PGW.

In an example of the present invention, optionally, the sending module 730 is further configured to send a network element notification message to the HSS after the determining module 710 determines that the PGW in which the UE is located is faulty and before the generation module 720 generates the VOPS capability indication information. The network element notification message is used to indicate that the HSS needs to query domain selection data in real time.

The MME 700 according to this embodiment of the present invention may be corresponding to an MME in the called service processing method according to the embodiments of the present invention, and the foregoing and other operations and/or functions of modules in the MME 700 are separately used to implement corresponding procedures of the foregoing methods. For brevity, details are not described herein.

According to the MME provided in this embodiment of the present invention, a called service is not affected after a PGW is faulty, and instantaneous sharp increase of signaling caused in voice service recovery after the PGW is faulty can also be avoided.

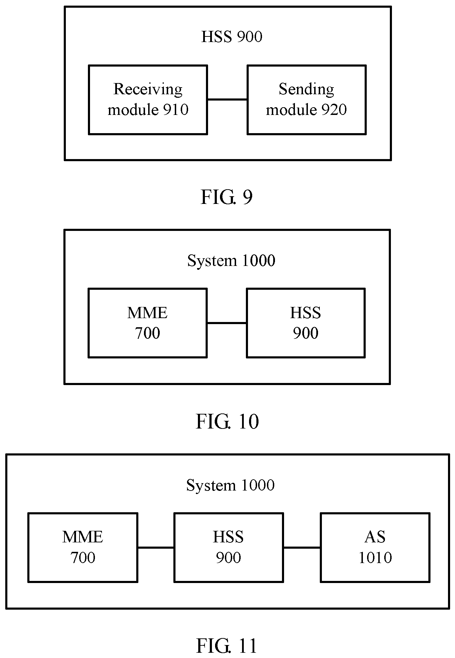

FIG. 9 shows a schematic block diagram of an HSS 900 according to an embodiment of the present invention. As shown in FIG. 9, the HSS 900 includes:
a receiving module 910, configured to receive voice over packet switch VOPS capability indication information sent by a mobility management entity MME, where the VOPS capability indication information is generated by the MME according to a faulty state of a packet data network gateway PGW after the MME determines that the PGW in which user equipment UE is located is faulty; and
a sending module 920, configured to send the VOPS capability indication information to an application server AS, where the VOPS capability indication information is used to instruct the AS to process a called service of the UE by means of circuit switched fallback CSFB.

The HSS in this embodiment of the present invention receives VOPS capability indication information generated by an MME according to a faulty state of a PGW in which UE is located, and sends the VOPS capability indication information to an AS, so that the AS may process a called service of the UE by means of CSFB. Therefore, the called service is not affected after the PGW is faulty.

In an example of the present invention, optionally, the receiving module 910 is further configured to receive, before receiving the VOPS capability indication information sent by the MME, a domain selection data query notification sent by the AS.

The sending module 920 is further configured to: respond to the domain selection data query notification, and send a domain selection data query request to the MME.

The receiving module 910 is specifically configured to receive the VOPS capability indication information sent by the MME, where the VOPS capability indication information is generated by the MME according to the domain selection data query request and the faulty state of the PGW after the MME determines that the packet data network gateway PGW in which the user equipment UE is located is faulty.

In an example of the present invention, optionally, the receiving module 910 is further configured to receive, before receiving the domain selection data query notification sent by the AS, a network element notification message sent by the MME. The network element notification message is used to indicate that the HSS needs to query domain selection data in real time.

In an example of the present invention, optionally, the receiving module 910 is further configured to:
receive, before receiving the VOPS capability indication information sent by the MME, a domain selection data query notification sent by the AS; and
the sending module 920 is specifically configured to: respond to the domain selection data query notification, and send the VOPS capability indication information to the application server AS.

The HSS 900 according to this embodiment of the present invention may be corresponding to an HSS in the called service processing method according to the embodiments of the present invention, and the foregoing and other operations and/or functions of modules in the HSS 900 are separately used to implement corresponding procedures of the foregoing methods. For brevity, details are not described herein.

According to the HSS in this embodiment of the present invention, a called service is not affected after a PGW is faulty, and instantaneous sharp increase of signaling caused in voice service recovery after the PGW is faulty can also be avoided.

An embodiment of the present invention further provides a system. As shown in FIG. 10, a system 1000 includes:
the MME 700 in the foregoing embodiment of the present invention and the HSS 900 in the embodiment of the present invention.

In an example of the present invention, optionally, as shown in FIG. 11, the system 1000 further includes:
an AS 1010, configured to process a called service of user equipment UE according to voice over packet switch VOPS capability indication information by means of circuit switched fallback CSFB.

The AS 1010 may be corresponding to an AS in the called service processing method according to the embodiments of the present invention.

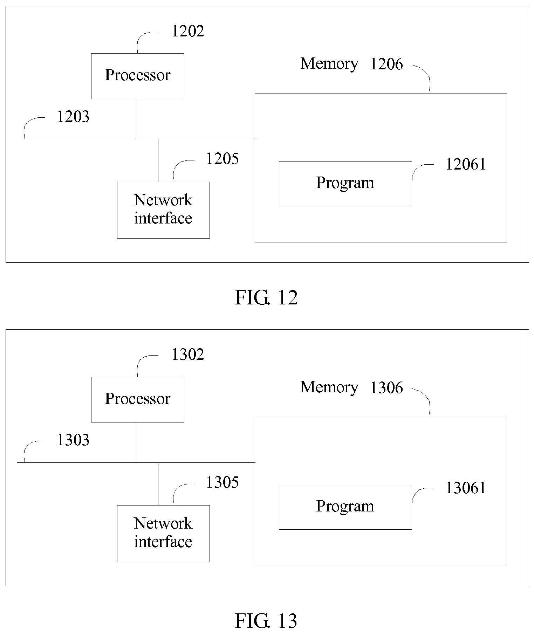

FIG. 12 shows a structure of an MME according to still another embodiment of the present invention. The MME includes at least one processor 1202 (for example, a CPU), at least one network interface 1205 or another communications interface, a memory 1206, and at least one communications bus 1203 that is configured to implement connection and communication between these apparatuses. The processor 1202 is configured to execute an executable module, such as a computer program, stored in the memory 1206. The memory 1206 may include a high-speed random access memory (RAM: Random Access Memory), or may also include a non-volatile memory (non-volatile memory), such as at least one magnetic disk memory. Communication and connection between the MME and at least one another network element are implemented by using the at least one network interface 1205 (which may be wired or wireless).

In some implementation manners, the memory 1206 stores a program 12061, and the processor 1202 executes the program 12061 to perform the following operations:
generating voice over packet switch VOPS capability indication information according to a faulty state of a packet data network gateway PGW after determining that the PGW in which user equipment UE is located is faulty, where the VOPS capability indication information is used to indicate that a network in which the UE is located does not support VOPS; and
sending the VOPS capability indication information to a home subscriber server HSS.

Optionally, the processor 1202 is configured to: after determining that the PGW in which the UE is located is faulty, receive a domain selection data query request sent by the HSS, and generate the VOPS capability indication information according to the domain selection data query request and the faulty state of the PGW

Optionally, the processor 1202 is configured to: before generating the voice over packet switch VOPS capability indication information according to the faulty state of the PGW,
determine that the PGW is faulty; and
send a network element notification message to the HSS, where the network element notification message is used to indicate that the HSS needs to query domain selection data in real time.

It can be learned from the foregoing technical solution provided in this embodiment of the present invention, in this embodiment of the present invention, VOPS capability indication information that is generated according to a faulty state of a PGW in which UE is located and that indicates that a network in which the UE is located does not support VOPS is sent to an HSS, and a called service of the UE may be processed by means of CSFB, so that the called service is not affected after the PGW is faulty.

FIG. 13 shows a structure of an HSS according to another embodiment of the present invention. The HSS includes at least one processor 1302 (for example, a CPU), at least one network interface 1305 or another communications interface, a memory 1306, and at least one communications bus 1303 that is configured to implement connection and communication between these apparatuses. The processor 1302 is configured to execute an executable module, such as a computer program, stored in the memory 1306. The memory 1306 may include a high-speed random access memory (RAM: Random Access Memory), or may also include a non-volatile memory (non-volatile memory), such as at least one magnetic disk memory. Communication and connection between the HSS and at least one another network element are implemented by using the at least one network interface 1305 (which may be wired or wireless).

In some implementation manners, the memory 1306 stores a program 13061, and the processor 1302 executes the program 13061 to perform the following operations:
receiving voice over packet switch VOPS capability indication information sent by a mobility management entity MME, where the VOPS capability indication information is generated by the MME according to a faulty state of a packet data network gateway PGW after the MME determines that the PGW in which user equipment UE is located is faulty; and
sending the VOPS capability indication information to an application server AS, where the VOPS capability indication information is used to instruct the AS to process a called service of the UE by means of circuit switched fallback CSFB.

Optionally, the processor 1302 is configured to: receive, before receiving the voice over packet switch VOPS capability indication information sent by the mobility management entity MME, a domain selection data query notification sent by the AS, respond to the domain selection data query notification, and send a domain selection data query request to the MME.

The processor 1302 is configured to receive the VOPS capability indication information sent by the MME. The VOPS capability indication information is generated by the MME according to the domain selection data query request and the faulty state of the PGW after the MME determines that the packet data network gateway PGW in which the user equipment UE is located is faulty.

Optionally, the processor 1302 is configured to receive, before receiving the domain selection data query notification sent by the AS, a network element notification message sent by the MME. The network element notification message is used to indicate that the HSS needs to query domain selection data in real time.

Optionally, the processor 1302 is configured to receive, after receiving the voice over packet switch VOPS capability indication information sent by the mobility management entity MME, a domain selection data query notification sent by the AS.

The processor 1302 is configured to: respond to the domain selection data query notification, and send the VOPS capability indication information to the application server AS.

It can be learned from the foregoing technical solution provided in this embodiment of the present invention, in this embodiment of the present invention, VOPS capability indication information generated by an MME according to a faulty state of a PGW in which UE is located is received, and the VOPS capability indication information is sent to an AS, so that the AS may process a called service of the UE by means of CSFB. Therefore, the called service is not affected after the PGW is faulty.

It should be understood that, the specific examples in the present invention are merely intended to help a person skilled in the art better understand the embodiments of the present invention, but are not intended to limit the scope of the embodiments of the present invention.

It should be understood that, the term "and/or" in the embodiments of the present invention describes only an association relationship for describing associated objects and indicates that three relationships may exist. For example, A and/or B may represent the following three cases: Only A exists, both A and B exist, and only B exists. In addition, the character "/" in this specification generally represents an "or" relationship between the associated objects.

A person of ordinary skill in the art may be aware that example units and algorithm steps described with reference to the embodiments disclosed in this specification may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A called service processing method to be operated at a mobility management entity, MME, comprising:
generating (S210), by the MME, voice over packet switch, VOPS, capability indication information according to a faulty state of a packet data network gateway, PGW, after determining that the PGW through which the data associated with a VoLTE call of a user equipment, UE, needs to pass is faulty, wherein the VOPS capability indication information is used to indicate that a network in which the UE is located does not support VOPS; and
sending (S220), by the MME, the VOPS capability indication information to a home subscriber server, HSS;
wherein the UE initially performs VoLTE for a call which falls back by means of circuit switched fallback, CSFB, after a PGW through which the call data pass through is detected as faulty.

2. The method according to claim 1, wherein the generating, by a mobility management entity, MME, voice over packet switch, VOPS, capability indication information according to a faulty state of a packet data network gateway, PGW, after determining that the PGW in which user equipment, UE, is located is faulty comprises:
after determining that the PGW in which the UE is located is faulty, receiving, by the MME, a domain selection data query request sent by the HSS, and generating the VOPS capability indication information according to the domain selection data query request and the faulty state of the PGW.

3. The method according to claim 1 or 2, wherein before the generating voice over packet switch, VOPS, capability indication information according to a faulty state of a PGW, the method further comprises:
determining, by the MME, that the PGW is faulty; and
sending, by the MME, a network element notification message to the HSS, wherein the network element notification message is used to indicate that the HSS needs to query domain selection data in real time, when the domain selection data needs to be queried during called party domain selection.

4. A called service processing method to be operated at a home subscriber server, HSS, comprising:
receiving (S610), by a HSS voice over packet switch, VOPS, capability indication information sent by a mobility management entity, MME, wherein the VOPS capability indication information is generated by the MME according to a faulty state of a packet data network gateway, PGW, after the MME determines that the PGW through which the data associated with a VoLTE call of a user equipment, UE, needs to pass is faulty; the VOPS capability indication information is used to indicate that a network in which the UE is located does not support VOPS; and
sending (S620), by the HSS, the VOPS capability indication information to an application server, AS, wherein the VOPS capability indication information is used to instruct the AS to process a called service of the UE by means of circuit switched fallback, CSFB;
wherein the UE initially performs VoLTE for a call which falls back by means of CSFB after a PGW through which the call data pass through is detected as faulty.

5. The method according to claim 4, wherein before the receiving, by a home subscriber server, HSS, voice over packet switch, VOPS, capability indication information sent by a mobility management entity, MME, the method further comprises:
receiving, by the HSS, a domain selection data query notification sent by the AS; and
responding, by the HSS, to the domain selection data query notification, and sending a domain selection data query request to the MME; and
the receiving, by a home subscriber server HSS, voice over packet switch, VOPS capability indication information sent by a mobility management entity, MME, comprises:
receiving, by the HSS, the VOPS capability indication information sent by the MME, wherein the VOPS capability indication information is generated by the MME according to the domain selection data query request and the faulty state of the packet data network gateway, PGW, after the MME determines that the PGW in which the user equipment UE is located is faulty.

6. The method according to claim 5, wherein before the receiving, by the HSS, a domain selection data query notification sent by the AS, the method further comprises:
receiving, by the HSS, a network element notification message sent by the MME, wherein the network element notification message is used to indicate that the HSS needs to query domain selection data in real time, when the domain selection data needs to be queried during called party domain selection.

7. The method according to claim 4, wherein
after the receiving, by a home subscriber server HSS, voice over packet switch, VOPS, capability indication information sent by a mobility management entity, MME, the method further comprises:
receiving, by the HSS, a domain selection data query notification sent by the AS; and
the sending, by the HSS, the VOPS capability indication information to an application server AS comprises:
responding, by the HSS, to the domain selection data query notification, and sending the VOPS capability indication information to the application server AS.

8. A mobility management entity, MME, (700) comprising:
a determining module (710), configured to determine that a packet data network gateway, PGW, through which the data associated with a VoLTE call of a user equipment, UE, needs to pass is faulty;
a generation module (720), configured to generate voice over packet switch, VOPS, capability indication information according to a faulty state of the PGW after the determining module determines that the PGW through which the data associated with a VoLTE call of the UE needs to pass is faulty, wherein the VOPS capability indication information is used to indicate that a network in which the UE is located does not support VOPS; and
a sending module (730), configured to send the VOPS capability indication information to a home subscriber server, HSS;
wherein UE initially performs VoLTE for a call which falls back by means of circuit switched fallback, CSFB, after a PGW through which the call data pass through is detected as faulty.

9. The MME according to claim 8, wherein the generation module is specifically configured to: after the determining module determines that the PGW in which the UE is located is faulty, receive a domain selection data query request sent by the HSS, and generate the VOPS capability indication information according to the domain selection data query request and the faulty state of the PGW.

10. The MME according to claim 8 or 9, wherein the sending module is further configured to send a network element notification message to the HSS after the determining module determines that the PGW in which the UE is located is faulty and before the generation module generates the VOPS capability indication information, and the network element notification message is used to indicate that the HSS needs to query domain selection data in real time, when the domain selection data needs to be queried during called party domain selection.

11. A home subscriber server, HSS, (900) comprising:
a receiving module (910), configured to receive voice over packet switch, VOPS, capability indication information sent by a mobility management entity, MME, wherein the VOPS capability indication information is generated by the MME according to a faulty state of a packet data network gateway, PGW, after the MME determines that the PGW through which the data associated with a VoLTE call of a user equipment, UE, needs to pass is faulty; the VOPS capability indication information is used to indicate that a network in which the UE is located does not support VOPS; and
a sending module (920), configured to send the VOPS capability indication information to an application server, AS, wherein the VOPS capability indication information is used to instruct the AS to process a called service of the UE by means of circuit switched fallback, CSFB;
wherein the UE initially performs VoLTE for a call which falls back by means of CSFB after a PGW through which the call data pass through is detected as faulty.

12. The HSS according to claim 11, wherein the receiving module is further configured to receive, before receiving the VOPS capability indication information sent by the MME, a domain selection data query notification sent by the AS;
the sending module is further configured to: respond to the domain selection data query notification, and send a domain selection data query request to the MME; and
the receiving module is specifically configured to receive the VOPS capability indication information sent by the MME, wherein the VOPS capability indication information is generated by the MME according to the domain selection data query request and the faulty state of the PGW after the MME determines that the packet data network gateway, PGW, in which the user equipment, UE, is located is faulty.

13. The HSS according to claim 12, wherein the receiving module is further configured to receive, before receiving the domain selection data query notification sent by the AS, a network element notification message sent by the MME, and the network element notification message is used to indicate that the HSS needs to query domain selection data in real time, when the domain selection data needs to be queried during called party domain selection.

14. The HSS according to claim 11, wherein the receiving module is further configured to:
receive, before receiving the VOPS capability indication information sent by the MME, a domain selection data query notification sent by the AS; and
the sending module is specifically configured to: respond to the domain selection data query notification, and send the VOPS capability indication information to the application server AS.

15. A system (1000), comprising:
the mobility management entity, MME, (700) according to any one of claims 8 to 10 and the home subscriber server, HSS, (900) according to any one of claims 11 to 14.

## Patentansprüche

1. Verfahren zur Verarbeitung eines angerufenen Dienstes, das auf einer Mobilitätsverwaltungseinheit, MME - "Mobility Management Entity", durchgeführt werden soll, welches Folgendes umfasst:
Erzeugen (S210), durch die MME, von VOPS(Voice Over Packet Switch)-Fähigkeitsanzeigeinformationen gemäß eines Fehlerstatus eines Paketdatennetzwerk-Gateways, PGW - "Packet Data Network Gateway", nach dem Bestimmen, dass das PGW, welches die Daten im Zusammenhang mit einem VoLTE-Anruf eines Endgerätes, UE - "User Equipment", passieren müssen, fehlerhaft ist, wobei die VOPS-Fähigkeitsanzeigeinformationen verwendet werden, um anzugeben, dass ein Netzwerk, in welchem sich das UE befindet, VOPS nicht unterstützt; und
Senden (S220), durch die MME, der VOPS-Fähigkeitsanzeigeinformationen an einen Heimteilnehmerserver, HSS - "Home Subscriber Server";
wobei das UE zunächst VoLTE für einen Anruf durchführt, welcher mittels eines leitungsvermittelten "Fallbacks", CSFB - "Circuit Switched Fallback", zurückgeht, nachdem ein PGW, welches die Anrufdaten passieren, als fehlerhaft erkannt wird.

2. Verfahren nach Anspruch 1, wobei das Erzeugen, durch eine Mobilitätsverwaltungseinheit, MME, von VOPS-Fähigkeitsanzeigeinformationen gemäß eines Fehlerstatus eines Paketdatennetzwerk-Gateways, PGW, nach dem Bestimmen, dass das PGW, in welchem sich ein Endgerät, UE, befindet, fehlerhaft ist, Folgendes umfasst:
nach dem Bestimmen, dass das PGW, in welchem sich das UE befindet, fehlerhaft ist, Empfangen, durch die MME, einer Domänenauswahldaten-Abfrageaufforderung, die durch den HSS gesendet wird, und Erzeugen der VOPS-Fähigkeitsanzeigeinformationen gemäß der Domänenauswahldaten-Abfrageaufforderung und des Fehlerstatus des PGW.

3. Verfahren nach Anspruch 1 oder 2, wobei, vor dem Erzeugen von VOPS-Fähigkeitsanzeigeinformationen gemäß einem Fehlerstatus eines PGW, das Verfahren ferner Folgendes umfasst:
Bestimmen, durch die MME, dass das PGW fehlerhaft ist; und
Senden, durch die MME, einer Netzwerkelement-Benachrichtigungsmeldung an den HSS, wobei die Netzwerkelement-Benachrichtigungsmeldung verwendet wird, um anzugeben, dass der HSS Domänenauswahldaten in Echtzeit abfragen muss, wenn die Domänenauswahldaten während einer Domänenauswahl einer angerufenen Partei abgefragt werden müssen.

4. Verfahren zur Verarbeitung eines angerufenen Dienstes, das auf einem Heimteilnehmerserver, HSS, durchgeführt werden soll, welches Folgendes umfasst: Empfangen (S610), durch einen HSS, von VOPS-Fähigkeitsanzeigeinformationen, die durch eine Mobilitätsverwaltungseinheit, MME, gesendet werden, wobei die VOPS-Fähigkeitsanzeigeinformationen durch die MME gemäß eines Fehlerstatus eines Paketdatennetzwerk-Gateways, PGW, erzeugt werden, nachdem die MME bestimmt, dass das PGW, welches die Daten im Zusammenhang mit einem VoLTE-Anruf eines Endgerätes, UE, passieren müssen, fehlerhaft ist; wobei die VOPS-Fähigkeitsanzeigeinformationen verwendet werden, um anzugeben, dass ein Netzwerk, in welchem sich das UE befindet, VOPS nicht unterstützt; und
Senden (S620), durch den HSS, der VOPS-Fähigkeitsanzeigeinformationen an einen Anwendungsserver, AS - "Application Server", wobei die VOPS-Fähigkeitsanzeigeinformationen verwendet werden, um den AS anzuweisen, einen angerufenen Dienst des UE mittels eines leitungsvermittelten "Fallbacks", CSFB, zu verarbeiten;
wobei das UE zunächst VoLTE für einen Anruf durchführt, welcher mittels CSFB zurückgeht, nachdem ein PGW, welches die Anrufdaten passieren, als fehlerhaft erkannt wird.

5. Verfahren nach Anspruch 4, wobei, vor dem Empfangen, durch einen Heimteilnehmerserver, HSS, von VOPS-Fähigkeitsanzeigeinformationen, die durch eine Mobilitätsverwaltungseinheit, MME, gesendet werden, das Verfahren ferner Folgendes umfasst:
Empfangen, durch den HSS, einer Domänenauswahldaten-Abfragebenachrichtigung, die durch den AS gesendet wird; und
Reagieren, durch den HSS, auf die Domänenauswahldaten-Abfragebenachrichtigung und Senden einer Domänenauswahldaten-Abfrageaufforderung an die MME; und
das Empfangen, durch einen Heimteilnehmerserver, HSS, von VOPS-Fähigkeitsanzeigeinformationen, die durch eine Mobilitätsverwaltungseinheit, MME, gesendet werden, Folgendes umfasst:
Empfangen, durch den HSS, der VOPS-Fähigkeitsanzeigeinformationen, die durch die MME gesendet werden, wobei die VOPS-Fähigkeitsanzeigeinformationen durch die MME gemäß der Domänenauswahldaten-Abfrageaufforderung und des Fehlerstatus des Paketdatennetzwerk-Gateways, PGW, erzeugt werden, nachdem die MME bestimmt, dass das PGW, in welchem sich das Endgerät, UE, befindet, fehlerhaft ist.

6. Verfahren nach Anspruch 5, wobei, vor dem Empfangen, durch den HSS, einer Domänenauswahldaten-Abfragebenachrichtigung, die durch den AS gesendet wird, das Verfahren ferner Folgendes umfasst:
Empfangen, durch den HSS, einer Netzwerkelement-Benachrichtigungsmeldung, die durch die MME gesendet wird, wobei die Netzwerkelement-Benachrichtigungsmeldung verwendet wird, um anzugeben, dass der HSS Domänenauswahldaten in Echtzeit abfragen muss, wenn die Domänenauswahldaten während einer Domänenauswahl einer angerufenen Partei abgefragt werden müssen.

7. Verfahren nach Anspruch 4, wobei,
nach dem Empfangen, durch einen Heimteilnehmerserver, HSS, von VOPS-Fähigkeitsanzeigeinformationen, die durch eine Mobilitätsverwaltungseinheit, MME, gesendet werden, das Verfahren ferner Folgendes umfasst:
Empfangen, durch den HSS, einer Domänenauswahldaten-Abfragebenachrichtigung, die durch den AS gesendet wird; und
das Senden, durch den HSS, der VOPS-Fähigkeitsanzeigeinformationen an einen Anwendungsserver, AS, Folgendes umfasst:
Reagieren, durch den HSS, auf die Domänenauswahldaten-Abfragebenachrichtigung und Senden der VOPS-Fähigkeitsanzeigeinformationen an den Anwendungsserver,
AS.

8. Mobilitätsverwaltungseinheit, MME, (700), welche Folgendes umfasst:
ein Bestimmungsmodul (710), das konfiguriert ist zum Bestimmen, dass ein Paketdatennetzwerk-Gateway, PGW, welches die Daten im Zusammenhang mit einem VoLTE-Anruf eines Endgerätes, UE, passieren müssen, fehlerhaft ist;
ein Erzeugungsmodul (720), das konfiguriert ist zum Erzeugen von VOPS-Fähigkeitsanzeigeinformationen gemäß eines Fehlerstatus des PGW, nachdem das Bestimmungsmodul bestimmt, dass das PGW, welches die Daten im Zusammenhang mit einem VoLTE-Anruf des UE passieren müssen, fehlerhaft ist, wobei die VOPS-Fähigkeitsanzeigeinformationen verwendet werden, um anzugeben, dass ein Netzwerk, in welchem sich das UE befindet, VOPS nicht unterstützt; und
ein Sendemodul (730), das konfiguriert ist zum Senden der VOPS-Fähigkeitsanzeigeinformationen an einen Heimteilnehmerserver, HSS;
wobei das UE zunächst VoLTE für einen Anruf durchführt, welcher mittels eines leitungsvermittelten "Fallbacks", CSFB, zurückgeht, nachdem ein PGW, welches die Anrufdaten passieren, als fehlerhaft erkannt wird.

9. MME nach Anspruch 8, wobei das Erzeugungsmodul spezifisch zu Folgendem konfiguriert ist: nachdem das Bestimmungsmodul bestimmt, dass das PGW, in welchem sich das UE befindet, fehlerhaft ist, Empfangen einer Domänenauswahldaten-Abfrageaufforderung, die durch den HSS gesendet wird, und Erzeugen der VOPS-Fähigkeitsanzeigeinformationen gemäß der Domänenauswahldaten-Abfrageaufforderung und des Fehlerstatus des PGW.

10. MME nach Anspruch 8 oder 9, wobei das Sendemodul ferner konfiguriert ist zum Senden einer Netzwerkelement-Benachrichtigungsmeldung an den HSS, nachdem das Bestimmungsmodul bestimmt, dass das PGW, in welchem sich das UE befindet, fehlerhaft ist und bevor das Erzeugungsmodul die VOPS-Fähigkeitsanzeigeinformationen erzeugt, und die Netzwerkelement-Benachrichtigungsmeldung verwendet wird, um anzugeben, dass der HSS Domänenauswahldaten in Echtzeit abfragen muss, wenn die Domänenauswahldaten während einer Domänenauswahl einer angerufenen Partei abgefragt werden müssen.

11. Heimteilnehmerserver, HSS, (900), welcher Folgendes umfasst:
ein Empfangsmodul (910), das konfiguriert ist zum Empfangen von VOPS-Fähigkeitsanzeigeinformationen, die durch eine Mobilitätsverwaltungseinheit, MME, gesendet werden, wobei die VOPS-Fähigkeitsanzeigeinformationen durch die MME gemäß eines Fehlerstatus eines Paketdatennetzwerk-Gateways, PGW, erzeugt werden, nachdem das MME bestimmt, dass das PGW, welches die Daten im Zusammenhang mit einem VoLTE-Anruf eines Endgerätes, UE, passieren müssen, fehlerhaft ist; wobei die VOPS-Fähigkeitsanzeigeinformationen verwendet werden, um anzugeben, dass ein Netzwerk, in welchem sich das UE befindet, VOPS nicht unterstützt; und
ein Sendemodul (920), das konfiguriert ist zum Senden der VOPS-Fähigkeitsanzeigeinformationen an einen Anwendungsserver, AS, wobei die VOPS-Fähigkeitsanzeigeinformationen verwendet werde, um den AS anzuweisen, einen angerufenen Dienst des UE mittels eines leitungsvermittelten "Fallbacks", CSFB, zu verarbeiten;
wobei das UE zunächst VoLTE für einen Anruf durchführt, welcher mittels eines CSFB zurückgeht, nachdem ein PGW, welches die Anrufdaten passieren, als fehlerhaft erkannt wird.

12. HSS nach Anspruch 11, wobei das Empfangsmodul ferner konfiguriert ist zum Empfangen, vor dem Empfangen der VOPS-Fähigkeitsanzeigeinformationen, die durch die MME gesendet werden, einer Domänenauswahldaten-Abfragebenachrichtigung, die durch den AS gesendet wird;
das Sendemodul ferner konfiguriert ist zum Reagieren auf die Domänenauswahldaten-Abfragebenachrichtigung und Senden einer Domänenauswahldaten-Abfrageaufforderung an die MME; und
das Empfangsmodul spezifisch konfiguriert ist zum Empfangen der VOPS-Fähigkeitsanzeigeinformationen, die durch die MME gesendet werden, wobei die VOPS-Fähigkeitsanzeigeinformationen durch die MME gemäß der Domänenauswahldaten-Abfrageaufforderung und des Fehlerstatus des PGW erzeugt werden, nachdem das MME bestimmt, dass das Paketdatennetzwerk-Gateway, PGW, in welchem sich das Endgerät, UE, befindet, fehlerhaft ist.

13. HSS nach Anspruch 12, wobei das Empfangsmodul ferner konfiguriert ist zum Empfangen, vor dem Empfangen der Domänenauswahldaten-Abfragebenachrichtigung, die durch den AS gesendet wird, einer Netzwerkelement-Benachrichtigungsmeldung, die durch die MME gesendet wird, und die Netzwerkelement-Benachrichtigungsmeldung verwendet wird, um anzugeben, dass der HSS Domänenauswahldaten in Echtzeit abfragen muss, wenn die Domänenauswahldaten während einer Domänenauswahl einer angerufenen Partei abgefragt werden müssen.

14. HSS nach Anspruch 11, wobei das Empfangsmodul ferner konfiguriert ist zum Empfangen, vor dem Empfangen der VOPS-Fähigkeitsanzeigeinformationen, die durch die MME gesendet werden, einer Domänenauswahldaten-Abfragebenachrichtigung, die durch den AS gesendet wird; und
das Sendemodul spezifisch konfiguriert ist zum Reagieren auf die Domänenauswahldaten-Abfragebenachrichtigung und Senden der VOPS-Fähigkeitsanzeigeinformationen an den Anwendungsserver, AS.

15. System (1000), welches Folgendes umfasst:
die Mobilitätsverwaltungseinheit, MME, (700) nach einem der Ansprüche 8 bis 10 und den Heimteilnehmerserver, HSS, (900) nach einem der Ansprüche 11 bis 14.

## Revendications

1. Procédé de traitement de service appelé à utiliser au niveau d'une entité de gestion de mobilité, MME, comprenant :
la génération (S210) par la MME, d'informations d'indication de capacité de commutation par voix sur paquet, VOPS, en fonction d'un état défectueux d'une passerelle de réseau de données par paquets, PGW, après avoir déterminé que la PGW à travers laquelle les données associées à un appel VoLTE d'un équipement d'utilisateur, UE, doivent passer est défectueuse, les informations d'indication de capacité de VOPS étant utilisées pour indiquer qu'un réseau dans lequel l'UE est situé ne prend pas en charge la VOPS ; et
l'envoi (S220), par la MME, des informations d'indication de capacité de VOPS à un serveur d'abonné domestique, HSS ;
l'UE réalisant initialement une VoLTE pour un appel qui est repris au moyen d'un repli à commutation de circuits, CSFB, après qu'une PGW à travers laquelle passent les données d'appel est détectée comme étant défectueuse.

2. Procédé selon la revendication 1, la génération, par une entité de gestion de mobilité, MME, des informations d'indication de capacité de commutation par voix sur paquet, VOPS, en fonction d'un état défectueux d'une passerelle de réseau de données par paquets, PGW, après avoir déterminé que la PGW dans laquelle un équipement d'utilisateur, UE, est situé est défectueuse, comprenant :
après avoir déterminé que la PGW dans laquelle se trouve l'UE est défectueuse, la réception, par la MME, d'une requête d'interrogation de données de sélection de domaine envoyée par le HSS, et la génération des informations d'indication de capacité de VOPS conformément à la requête d'interrogation de données de sélection de domaine et à l'état défectueux de la PGW.

3. Procédé selon la revendication 1 ou 2, avant la génération des informations d'indication de capacité de commutation par voix sur paquet, VOPS, en fonction d'un état défectueux d'une PGW, le procédé comprenant en outre :
la détermination, par la MME, que la PGW est défectueuse ; et
l'envoi, par la MME, d'un message de notification d'élément de réseau au HSS, le message de notification d'élément de réseau étant utilisé pour indiquer que le HSS a besoin de demander des données de sélection de domaine en temps réel, lorsque les données de sélection de domaine doivent être interrogées pendant la sélection de domaine de partie appelée.

4. Procédé de traitement de service appelé à utiliser au niveau d'un serveur d'abonné domestique, HSS, comprenant :
la réception (S610), par un HSS des informations d'indication de capacité de commutation par voix sur paquet, VOPS, envoyées par une entité de gestion de mobilité, MME, les informations d'indication de capacité de VOPS étant générées par la MME en fonction d'un état défectueux d'une passerelle de réseau de données par paquets, PGW, après que la MME détermine que la PGW à travers laquelle les données associées à un appel VoLTE d'un équipement d'utilisateur, UE, doivent passer est défectueuse ; les informations d'indication de capacité de VOPS étant utilisées pour indiquer qu'un réseau dans lequel l'UE est situé ne prend pas en charge la VOPS ; et
l'envoi (S620), par le HSS, des informations d'indication de capacité de VOPS à un serveur d'application, AS, les informations d'indication de capacité de VOPS étant utilisées pour ordonner au AS de traiter un service appelé de l'UE au moyen d'un repli à commutation de circuits, CSFB ;
l'UE réalisant initialement une VoLTE pour un appel qui est repris au moyen d'un CSFB après qu'une PGW à travers laquelle passent les données d'appel est détectée comme étant défectueuse.

5. Procédé selon la revendication 4, avant la réception, par un serveur d'abonné domestique, HSS, des informations d'indication de capacité de commutation par voix sur paquet, VOPS, envoyées par une entité de gestion de mobilité, MME, le procédé comprenant en outre :
la réception, par le HSS, d'une notification d'interrogation de données de sélection de domaine envoyée par l'AS ; et
la réponse, par le HSS, à la notification d'interrogation de données de sélection de domaine, et l'envoi d'une requête d'interrogation de données de sélection de domaine à la MME ; et
la réception, par un serveur d'abonné domestique, HSS, des informations d'indication de capacité de commutation par voix sur paquet, VOPS envoyées par une entité de gestion de mobilité, MME, comprenant :
la réception, par le HSS, des informations d'indication de capacité de VOPS envoyées par la MME, les informations d'indication de capacité de VOPS étant générées par la MME conformément à la requête d'interrogation de données de sélection de domaine et à l'état défectueux de la passerelle de réseau de données par paquets, PGW, après que la MME détermine que la PGW dans laquelle l'équipement d'utilisateur UE est situé est défectueuse.

6. Procédé selon la revendication 5, avant la réception, par le HSS, d'une notification d'interrogation de données de sélection de domaine envoyée par l'AS, le procédé comprenant en outre :
la réception, par le HSS, d'un message de notification d'élément de réseau envoyé par la MME, le message de notification d'élément de réseau étant utilisé pour indiquer que le HSS a besoin de demander des données de sélection de domaine en temps réel, lorsque les données de sélection de domaine doivent être interrogées pendant la sélection de domaine de partie appelée.

7. Procédé selon la revendication 4,
après la réception, par un serveur d'abonné domestique, HSS, des informations d'indication de capacité de commutation par voix sur paquet, VOPS, envoyées par une entité de gestion de mobilité, MME, le procédé comprenant en outre :
la réception, par le HSS, d'une notification d'interrogation de données de sélection de domaine envoyée par l'AS ; et
l'envoi, par le HSS, des informations d'indication de capacité de VOPS à un serveur d'application AS comprenant :
la réponse, par le HSS, à la notification d'interrogation de données de sélection de domaine, et l'envoi des informations d'indication de capacité de VOPS au serveur d'application AS.

8. Entité de gestion de mobilité, MME, (700) comprenant :
un module de détermination (710) configuré pour déterminer qu'une passerelle de réseau de données par paquets, PGW, à travers laquelle les données associées à un appel VoLTE d'un équipement d'utilisateur, UE, doivent passer est défectueuse ;
un module de génération (720) configuré pour générer des informations d'indication de capacité de commutation par voix sur paquet, VOPS, en fonction d'un état défectueux de la PGW après que le module de détermination détermine que la PGW à travers laquelle les données associées à un appel VoLTE de l'UE doivent passer est défectueuse, les informations d'indication de capacité de VOPS étant utilisées pour indiquer qu'un réseau dans lequel l'UE est situé ne prend pas en charge la VOPS ; et
un module d'envoi (730), configuré pour envoyer les informations d'indication de capacité de VOPS à un serveur d'abonné domestique, HSS ;
l'UE réalisant initialement une VoLTE pour un appel qui est repris au moyen d'un repli à commutation de circuits, CSFB, après qu'une PGW à travers laquelle passent les données d'appel est détectée comme étant défectueuse.

9. MME selon la revendication 8, le module de génération étant spécifiquement configuré pour : après que le module de détermination détermine que la PGW dans laquelle se trouve l'UE est défectueuse, recevoir une requête d'interrogation de données de sélection de domaine envoyée par le HSS, et générer les informations d'indication de capacité de VOPS conformément à la requête d'interrogation de données de sélection de domaine et à l'état défectueux de la PGW.

10. MME selon la revendication 8 ou 9, le module d'envoi étant en outre configuré pour envoyer un message de notification d'élément de réseau au HSS une fois que le module de détermination détermine que la PGW dans laquelle l'UE est situé est défectueuse et avant que le module de génération ne génère les informations d'indication de capacité de VOPS, et le message de notification d'élément de réseau étant utilisé pour indiquer que le HSS a besoin de demander des données de sélection de domaine en temps réel, lorsque les données de sélection de domaine doivent être interrogées pendant la sélection de domaine de partie appelée.

11. Serveur d'abonné domestique, HSS, (900) comprenant :
un module de réception (910), configuré pour recevoir des informations d'indication de capacité de commutation par voix sur paquet, VOPS, envoyées par une entité de gestion de mobilité, MME, les informations d'indication de capacité de VOPS étant générées par la MME conformément à un état défectueux d'une passerelle de réseau de données par paquets, PGW, après que la MME détermine que la PGW à travers laquelle les données associées à un appel VoLTE d'un équipement d'utilisateur, UE, doivent passer est défectueuse ; les informations d'indication de capacité de VOPS étant utilisées pour indiquer qu'un réseau dans lequel l'UE est situé ne prend pas en charge la VOPS ; et
un module d'envoi (920), configuré pour envoyer les informations d'indication de capacité de VOPS à un serveur d'application, AS, les informations d'indication de capacité de VOPS étant utilisées pour ordonner au AS de traiter un service appelé de l'UE au moyen d'un repli à commutation de circuits, CSFB ;
l'UE réalisant initialement une VoLTE pour un appel qui est repris au moyen d'un CSFB après qu'une PGW à travers laquelle passent les données d'appel est détectée comme étant défectueuse.

12. HSS selon la revendication 11, le module de réception étant en outre configuré pour recevoir, avant de recevoir les informations d'indication de capacité de VOPS envoyées par la MME, une notification d'interrogation de données de sélection de domaine envoyée par l'AS ;
le module d'envoi étant en outre configuré pour : répondre à la notification d'interrogation de données de sélection de domaine, et envoyer une requête d'interrogation de données de sélection de domaine à la MME ; et
le module de réception étant spécifiquement configuré pour recevoir les informations d'indication de capacité de VOPS envoyées par la MME, les informations d'indication de capacité de VOPS étant générées par la MME conformément à la requête d'interrogation de données de sélection de domaine et à l'état défectueux de la PGW après que la MME détermine que la passerelle de réseau de données par paquets, PGW, dans laquelle l'équipement d'utilisateur, UE, est situé est défectueuse.

13. HSS selon la revendication 12, le module de réception étant en outre configuré pour recevoir, avant de recevoir la notification d'interrogation de données de sélection de domaine envoyée par l'AS, un message de notification d'élément de réseau envoyé par la MME, et le message de notification d'élément de réseau étant utilisé pour indiquer que le HSS a besoin de demander des données de sélection de domaine en temps réel, lorsque les données de sélection de domaine doivent être interrogées pendant la sélection de domaine de partie appelée.

14. HSS selon la revendication 11, le module de réception étant en outre configuré pour :
recevoir, avant de recevoir les informations d'indication de capacité de VOPS envoyées par la MME, une notification d'interrogation de données de sélection de domaine envoyée par l'AS ; et
le module d'envoi étant spécifiquement configuré pour : répondre à la notification d'interrogation de données de sélection de domaine, et envoyer les informations d'indication de capacité de VOPS au serveur d'application AS.

15. Système (1000), comprenant :
l'entité de gestion de mobilité, MME, (700) selon l'une quelconque des revendications 8 à 10, et le serveur d'abonné domestique, HSS, (900) selon l'une quelconque des revendications 11 à 14.
